# EUROPÄISCHE PATENTSCHRIFT

(11) **EP 0 800 046 B1**
(45) Veröffentlichungstag und Bekanntmachung des Hinweises auf die Patenterteilung: **19.12.2001**
(21) Anmeldenummer: 96112389.0
(22) Anmeldetag: 31.07.1996
(51) Int. Cl.: F25J 3/04, B01D 53/88, B01D 53/86, B01J 35/06

(54) **Verfahren und Vorrichtung zur Erzeugung eines hochreinen Produkts durch Tieftemperatur-Luftzerlegung**
Method and device for the production of a high-purity product through cryogenic air separation
Procédé et dispositif pour la préparation d'un produit de haute purité par séparation d'air cryogénique

(30) Priorität: 04.04.1996 DE 19613648
(43) Veröffentlichungstag der Anmeldung: 08.10.1997
(73) Patentinhaber: Linde Aktiengesellschaft, 65189 Wiesbaden (DE)
(72) Erfinder: von Gemmingen, Ulrich, Dr. Dipl.-Phys., 80803 München (DE)

(56) Entgegenhaltungen:
- US-A- 5 238 670
- US-A- 5 330 956
- PATENT ABSTRACTS OF JAPAN vol. 18, no. 239 (M-1601), 9.Mai 1994 & JP-A-06 026760 (HOXAN CORP.), 4.Februar 1994, & DATABASE WPI Section Ch, Week 9411 Derwent Publications Ltd., London, GB; Class E36, AN 98-086129 & JP-A-06 026 760 (DAIDO SANSO K,K,) , 4.Februar 1994
- PATENT ABSTRACTS OF JAPAN vol. 18, no. 435 (M-1655), 15.August 1994 & JP-A-06 129763 (DAIDO HOXAN INC.), 13.Mai 1994, & DATABASE WPI Section Ch, Week 9424 Derwent Publications Ltd., London, GB; Class E36, AN 94-194131 & JP-A-06 129 763 (HOKUSAN K.K.) , 13.Mai 1994
- DATABASE WPI Week 7444 Derwent Publications Ltd., London, GB; AN 74-76487V XP002013503 & JP-A-49 037 890 (KANEBO CO.) , 8.April 1974
- DATABASE WPI Section Ch, Week 9606 Derwent Publications Ltd., London, GB; Class A97, AN 96-054216 XP002013504 & JP-A-07 313 887 (TOYOBO K.K.) , 5.Dezember 1995

## Beschreibung

Die Erfindung betrifft ein Verfahren zur Erzeugung eines hochreinen Produkts durch Tieftemperatur-Luftzerlegung, bei dem Einsatzluft einer katalytischen Reinigung und anschließend einem Rektifiziersystem zugeführt und das hochreine Produkt dem Rektifiziersystem entnommen wird, wobei die Einsatzluft bei der katalytischen Reinigung eine katalytisch aktive Schicht durchströmt.

Es ist bekannt, aus der Ansaugluft von Luftzerlegern Verunreinigungen wie Kohlenmonoxid und Wasserstoff durch eine katalytische Oxidation von Kohlenmonoxid zu Kohlendioxid und/oder Wasserstoff zu Wasser an Katalysatorschichten zu entfernen. Das Katalysatormaterial kann aus einer Schüttung von Hopcalit (Gemisch von Oxiden und/oder Peroxiden von Mangan, Silber, Kobalt und/oder Kupfer) bestehen, oder aus einer Schüttung von Aluminiumoxid, in das Palladium oder Platin oder auch Ruthenium, Osmium, Iridium, oder Rhodium implementiert ist.

Beispiele für die Erzeugung Reinigung von Einsatzluft für eine Luftzerlegungsanlage für die Erzeugung eines ultrareinen Gases finden sich in der EP-0 438 282-A1 und der EP-0 454 531-A1. Gemäß diesem Stand der Technik enthalten die Molsiebadsorber, die zur Entfernung von Wasser und Kohlendioxid dient, nach einer Schicht Aluminiumoxid zur Wasserentfernung je eine Schicht Hopcalit und Palladiumaktiviertes Aluminiumoxid zur Kohlenmonoxid- und Wasserstoffumwandlung bei Umgebungstemperaturen von 0 bis 50°C und schließlich eine Molekularsiebschicht zur adsorptiven Entfernung des Restwassers, des Kohlendioxids sowie der Kohlenwasserstoffe.

Durch die Hinzunahme der Katalysatorschichten vergrößert sich die Schütthöhe der Molsiebadsorber erheblich, da die Katalysatorschichten jeweils eine Mindestdicke haben müssen, um den Aufwand bei der Schüttgutverteilung und Fixierung in Grenzen zu halten. Die Schütthöhen sind insgesamt insbesondere durch die Forderung von geringstmöglichen Druckverlusten begrenzt, und jede weitere Vergrößerung wirkt sich ungünstig auf das Gesamtverhalten des Luftzerlegers aus.

Zwischen den Schichten werden mechanische Trenngitter benötigt, was insbesondere bei radial durchströmten Adsorbem einen erheblichen konstruktiven Aufwand bedeutet. Auch sind solche Trenngitter als potentielle Abscheider von Schwitzwasser bei der Regenerierung problematisch.

Der Erfindung liegt die Aufgabe zugrunde, ein Verfahren und eine Vorrichtung zur Erzeugung eines hochreinen Produkts durch Tieftemperatur-Luftzerlegung zur Verfügung zu stellen, das sich durch einen besonders niedrigen apparativen Aufwand auszeichnet.

Diese Aufgabe wird bei dem erfindungsgemäßen Verfahren durch die Merkmale des Patentanspruchs 1 gelöst.

Durch die geringe Schichtdicke ist es bei der Erfindung möglich, die Abmessungen der Reinigungsstufe besonders gering zu halten. Dies verringert einerseits des apparativen Aufwand, andererseits entsteht während des Betriebs nur ein relativ geringer Druckverlust.

Die erfindungsgemäße geringe Schichtdicke wird dadurch realisiert, daß die katalytisch aktive Schicht eine matrixartige Struktur aufweist. Darunter wird hier eine regelmäßige oder unregelmäßige flächenartige Struktur verstanden, die eine besonders hohe äußere Oberfläche aufweist Diese Struktur kann durch ein Trägermaterial oder auch durch das Katalysatormaterial selbst gebildet sein. Selbstverständlich ist es günstig, wenn das Träger- beziehungsweise Katalysatormaterial selbst porös ist, also zusätzlich zu der durch die matrixartige Struktur bewirkten hohen äußeren Oberfläche ein hohe innere Oberfläche aufweist. Beispiel hierfür ist ein mit Katalysator dotierter Zeolith.

Eine solche matrixartige Struktur kann beispielsweise gitterartig (regelmäßig) oder textil (in der Regel unregelmäßig) ausgeführt sein. Der Begriff Gitter schließt hier auch wabenförmige Gebilde ein. Als Materialien kann bei einem Gitter beispielsweise Metall verwendet werden. Bei textiler Struktur kommen vorzugsweise Fasern aus Kunststoff oder keramischem Material zum Einsatz, die verwoben und/oder verfilzt sind. Mit diesen Methoden ergeben sich flexible flächenartige Strukturen geringer Schichtdicke. Sie können auf den gewünschten Strömungsquerschnitt zugeschnitten werden.

Die katalytisch aktive Schicht weist vorzugsweise ein Fasermaterial auf, in dem katalytisch aktive Metalle und/oder Metallverbindungen feinstverteilt implementiert sind.

Bei den katalytisch aktiven Metallen und/oder Metallverbindungen handelt es sich vorzugsweise um Palladium, Platin, Mangan, Silber, Kobalt und/oder Kupfer und/oder Verbindungen dieser Metalle. Beispielsweise kann als Katalysator Hopcalit in Faserform verwendet werden. In diesem Fall kann auf ein getrenntes Trägermaterial verzichtet werden; Hopcalit erfüllt beide Funktionen, die der katalytischen Aktivität und die eines Trägers.

Durch geeignete Verfahrensführung, wie sie in der gleichzeitig eingereichten europäischen Patentanmeldung (internes Aktenzeichen H96/045-EP), die als EP 799633 A1 veröffentlicht wurde, beschrieben ist, wird vorteilhafterweise ein niedriger Oxidationsgrad der aktiven Metalle eingehalten.

Gemäß einer besonders bevorzugten Ausführungsform der Erfindung wird die Einsatzluft bei der katalytischen Reinigung über mindestens eine drucksteife Fasermatte geleitet. Dabei kommen Fasermaterialien zur Anwendung, die in ihrer Form dem bekannten Aktivkohlefiber-Vlies entsprechen, welches z.B. in rotierenden Adsorbem zur Lösungsmittelrückgewinnung eingesetzt wird. Im Gegensatz zu diesen bekannten Fasermaterialien sind jedoch erfindungsgemäß katalytisch aktive Metalle feinstverteilt in dem Fasermaterial implementiert.

Zweckmäßigerweise wird die Einsatzluft über mindestens eine Fasermatte geleitet, die katalytisch aktive Metalle und/oder Metallverbindungen (z.B. Palladium, Platin oder andere benötigte Übergangsmetalle bzw. Hopcalit) enthält und eine Dicke von ca. 10 bis ca. 20 mm aufweist. Diese Dicke reicht aus, um die Oxidation von Kohlenmonoxid und Wasserstoff zu gewährleisten. Selbstverständlich können auch mehrere Fasermatten übereinander angeordnet werden. Die jeweils erforderliche Schichtdicke kann auf einfache Weise durch Mehrfachlagen angepaßt werden.

Vorzugsweise wird die Einsatzluft mit einer Gasgeschwindigkeit von ca. 0,05 bis ca. 0,2 m/s, besonders vorteilhaft ca. 0,1 m/s, über das Fasermaterial geleitet.

Bei Versuchen hat sich gezeigt, daß der Umsetzungsgrad von Hopcalit wie auch von palladium- oder platinimplementiertem Aluminiumoxid äußerst hoch ist, wenn Gasfeuchte und Oxidationsgrad der Katalysatoren niedrig gehalten werden. Hierbei hatten Schichten von wenigen Millimetern bei Gasgeschwindigkeiten um 0,1 m/s (typisch für Molsiebstationen) aus trockener Luft mit 1 bis 10 Vppm Kohlenmonoxid bereits 95 bis 98 % des Kohlenmonoxids zu Kohlendioxid umgewandelt, und die erreichbaren Produktreinheiten lagen unter 20 Vppb Kohlenmonoxid. Eine ähnlich hohe Reaktionsrate wurde bei der Wasserstoffumwandlung an Palladium-Aluminiumoxid in reduzierter Form festgestellt.

Daher reichen für die Umwandlung meist sehr kurze Kontaktzeiten bzw. Umwandlungsstrecken im Bereich von Zentimetern aus, und die durch die Anwendung von Schichtschüttungen konstruktiv bedingten 100 bis 150 mm Mindestschichthöhen werden lediglich zu einem Bruchteil genutzt. Die ökonomisch gebotene Verkürzung der teuren Schichten gelingt nun durch den Einsatz von faserförmigem Material.

Gemäß einer besonders zweckmäßigen Ausgestaltung wird die Einsatzluft durch einen Behälter geleitet wird, in dem die katalytische Reinigung und mindestens ein Adsorptionsschritt durchgeführt werden. Dabei wird die Ansaugluft vorzugsweise durch ein Bett aus Mischschichten geleitet, das aus mindestens einer Schüttung eines Adsorptionsmaterials und mindestens einer Fasermatte besteht. Es ergibt sich so eine kompakte Reinigungseinheit, die auf kleinstem Raum eine effektive Adsorption und katalytische Umwandlung der Luftinhaltsstoffe bewirkt. Eine solche Reinigungseinheit kann einfach in den Ansaugluftkanal einer Luftzerlegungsanlage eingebaut werden, um hochreine Gase im Luftzerleger herzustellen.

Die Erfindung bezieht sich außerdem auf eine Vorrichtung gemäß Patentanspruch 7. Die Ansprüche 8 bis 14 beschreiben vorteilhafte Ausführungsformen dieser Vorrichtung.

Die Erfindung bietet eine ganze Reihe von Vorteilen:

Der Einsatz der katalytisch aktiven Fasermatten ergibt eine hohe Einsparung an teurem Katalysatormaterial. Die bei üblichen Katalysatorschüttungen benötigten mechanischen Trenngitter können entfallen. Durch Mehrfachlagen von parallel übereinander angeordneten Fasermatten kann die jeweils erforderliche Schichtdicke auf einfache Weise angepaßt werden. Schließlich verringert die verkürzte Schütthöhe die Kosten für die Behälterausführung der Reinigungseinheit.

Im folgenden soll die Erfindung anhand eines Ausführungsbeispiels näher erläutert werden:

In den Einsatzluftkanal einer Luftzerlegungsanlage ist eine Reinigungseinheit eingeschaltet. Im Luftzerleger wird hochreiner Stickstoff hergestellt. Die Reinigungseinheit enthält eine Adsorptionsstufe aus Alugel und/oder Molsieb, die Wasser, Kohlendioxid und Kohlenwasserstoffe bis auf Restgehalte von wenigen Vppb entfernt. In der Reinigungseinheit sind über einer Schicht Aluminiumoxid zur Wasserentfernung 2 Lagen von Fasermatten mit jeweils einer Dicke von 20 mm angeordnet.

In dem Fasermaterial sind katalytisch aktive Metalle bzw. Metallverbindungen, nämlich Hopcalit, Palladium und Platin feinstverteilt implementiert. Eine Fasermatte weist Gehalte an katalytisch aktiven Metallen von 0,5 Gew.-% Palladium und 40 Gew.-% Hopcalit (MnO₄, CuO) auf.

In den Fasermatten werden die Anteile von Kohlenmonoxid und Wasserstoff in der Ansaugluft der Luftzerlegungsanlage zu Kohlendioxid und Wasser katalytisch oxidiert. Die Umwandlung erfolgt dabei bei einer Temperatur von ca. 8 bis ca. 15°C.

Über den Fasermatten ist schließlich eine Molekularsiebschicht zur adsorptiven Entfernung des Restwassers, des Kohlendioxids sowie der Kohlenwasserstoffe angeordnet.

Die Einsatzluft für die Luftzerlegungsanlage wird mit einer Gasgeschwindigkeit von 0,1 m/s durch die beschriebene Reinigungseinheit hindurchgeleitet. Dabei werden ca. 98 % des Kohlenmonoxids durch das katalytisch aktive Fasermaterial zu Kohlendioxid umgewandelt. Stromabwärts der Reinigungseinheit ergibt sich eine Konzentration an Kohlenmonoxid von unter 10 Vppb in der Einsatzluft der Luftzerlegungsanlage. Eine ähnlich hohe Reaktionsrate ergibt sich hinsichtlich der Wasserstoff-Umwandlung.

Die vorgeschlagene Reinigungseinheit ist kompakt und äußerst wirtschaftlich, da teures Katalysatormaterial eingespart werden kann. Die mit der Reinigungseinheit erzielten äußerst geringen Druckverluste wirken sich darüber hinaus günstig auf das Gesamtverhalten des Luftzeriegers aus.

## Patentansprüche

1. Verfahren zur Erzeugung eines hochreinen Produkts durch Tieftemperatur-Luftzerlegung, bei dem Einsatzluft einer katalytischen Reinigung und anschließend einem Rektifiziersystem zugeführt und das hochreine Produkt dem Rektifiziersystem entnommen wird, wobei die Einsatzluft bei der katalytischen Reinigung eine katalytisch aktive Schicht durchströmt, wobei die Abmessung der katalytisch aktiven Schicht in Strömungsrichtung mindestens zehnmal kleiner als ihre Abmessung in Richtung senkrecht zur Strömungsrichtung ist und die katalytisch aktive Schicht eine matrixartige, insbesondere gitterartige oder textile Struktur aufweist.

2. Verfahren nach Anspruch 1, **dadurch gekennzeichnet, daß** die katalytisch aktive Schicht ein Fasermaterial aufweist, in dem katalytisch aktive Metalle und/oder Metallverbindungen feinstverteilt implementiert sind.

3. Verfahren nach einem der Ansprüche 1 bis 2, **dadurch gekennzeichnet, daß** die Einsatzluft bei der katalytischen Reinigung über mindestens eine drucksteife Fasermatte geleitet wird.

4. Verfahren nach Anspruch 3, **dadurch gekennzeichnet, daß** die Einsatzluft über mindestens eine Fasermatte geleitet wird, die eine Dicke von ca. 10 bis ca. 20 mm aufweist.

5. Verfahren nach einem der Ansprüche 1 bis 4, **dadurch gekennzeichnet, daß** die Einsatzluft mit einer Gasgeschwindigkeit von ca. 0,05 bis ca. 0,2 m/s, vorzugsweise ca. 0,1 m/s, durch die katalytisch aktive Schicht geleitet wird.

6. Verfahren nach einem der Ansprüche 1 bis 5, **dadurch gekennzeichnet, daß** die Einsatzluft durch einen Behälter geleitet wird, in dem die katalytische Reinigung und mindestens ein Adsorptionsschritt durchgeführt werden.

7. Vorrichtung zur Erzeugung eines hochreinen Produkts durch Tieftemperatur-Luftzerlegung, die einen Einsatzluftkanal aufweist, in dem eine Reinigungseinheit angeordnet ist, die eine Katalysatorstufe mit einer katalytisch aktiven Schicht aufweist, wobei der Einsatzluftkanal zu einem Rektifiziersystem führt, das mindestens eine Produktleitung für hochreines Produkt aufweist, **dadurch gekennzeichnet, daß** die Abmessung der katalytisch aktiven Schicht in Strömungsrichtung mindestens zehnmal kleiner als ihre Abmessung in Richtung senkrecht zur Strömungsrichtung ist und die katalytisch aktive Schicht eine matrixartige, insbesondere gitterartige oder textile Struktur aufweist.

8. Vorrichtung nach Anspruch 7, **dadurch gekennzeichnet, daß** die Katalysatorstufe ein Material enthält, in dem katalytisch aktive Metalle und/oder Metallverbindungen in einer matrixartigen Struktur feinstverteilt implementiert sind.

9. Vorrichtung nach Anspruch 8, **dadurch gekennzeichnet, daß** die katalytisch aktiven Metalle und/oder Metallverbindungen Palladium, Platin, Mangan, Silber, Kobalt und/oder Kupfer und/oder Verbindungen dieser Metalle enthalten.

10. Vorrichtung nach einem der Ansprüche 7 bis 9, **dadurch gekennzeichnet, daß** die Katalysatorstufe ein Fasermaterial enthält.

11. Vorrichtung nach Anspruch 10, **dadurch gekennzeichnet, daß** das Fasermaterial als drucksteife Fasermatte ausgebildet ist.

12. Vorrichtung nach Anspruch 11, **dadurch gekennzeichnet, daß** die Fasermatte eine Dicke von ca. 10 bis ca. 20 mm aufweist.

13. Vorrichtung nach Anspruch 11 oder 12, **dadurch gekennzeichnet, daß** mehrere Fasermatten parallel übereinander angeordnet sind.

14. Vorrichtung nach einem der Ansprüche 11 bis 13, **dadurch gekennzeichnet, daß** die Reinigungseinheit mindestens einer Fasermatte und mindestens eine Schüttung eines Adsorptionsmaterials enthält.

## Claims

1. Process for producing a high-purity product by cryogenic air separation in which the feed air is fed to a catalytic purification and then to a rectifying system and the high-purity product is taken off from the rectifying system, the feed air, during the catalytic purification, flowing through a catalytically active layer, the dimension of the catalytically active layer in the direction of flow being at least ten times smaller than its dimension in the direction perpendicular to the direction of flow and the catalytically active layer having a matrix-like, in particular lattice-like or textile-type structure.

2. Process according to Claim 1, **characterized in that** the catalytically active layer has a fibre material in which catalytically active metals and/or metal compounds are implanted in very finely divided form.

3. Process according to one of Claims 1 to 2, **characterized in that** the feed air, during the catalytic purification, is passed over at least one compression-resistant fibre mat.

4. Process according to Claim 3, **characterized in that** the feed air is passed over at least one fibre mat that has a thickness of approximately 10 to approximately 20 mm.

5. Process according to one of Claims 1 to 4, **characterized in that** the feed air is passed through the catalytically active layer at a gas velocity of approximately 0.05 to approximately 0.2 m/s, preferably approximately 0.1 m/s.

6. Process according to one of Claims 1 to 5, **characterized in that** the feed air is passed through a vessel in which the catalytic purification and at least one adsorption step are carried out.

7. Apparatus for producing a high-purity product by cryogenic air separation that has a feed air duct in which is disposed a purification unit that has a catalyst stage having a catalytically active layer, the feed air duct leading to a rectifying system that has at least one product line for high-purity product, **characterized in that** the dimension of the catalytically active layer in the direction of flow is at least ten times smaller than its dimension in the direction perpendicular to the direction of flow and the catalytically active layer has a matrix-like, in particular lattice-like or textile-type structure.

8. Apparatus according to Claim 7, **characterized in that** the catalyst stage comprises a material in which catalytically active metals and/or metal compounds are implanted in very finely divided form in a matrix-like structure.

9. Apparatus according to Claim 8, **characterized in that** the catalytically active metals and/or metal compounds comprise palladium, platinum, manganese, sulphur, cobalt and/or copper and/or compounds of these metals.

10. Apparatus according to one of Claims 7 to 9, **characterized in that** the catalyst stage comprises a fibre material.

11. Apparatus according to Claim 10, **characterized in that** the fibre material is constructed as a compression-resistant fibre mat.

12. Apparatus according to Claim 11, **characterized in that** the fibre mat has a thickness of approximately 10 to approximately 20 mm.

13. Apparatus according to Claim 11 or 12, **characterized in that** a plurality of fibre mats are disposed in parallel one above the other.

14. Apparatus according to one of Claims 11 to 13, **characterized in that** the purification unit comprises at least one fibre mat and at least one bed of an adsorption material.

## Revendications

1. Procédé pour la préparation d'un produit de haute pureté par séparation d'air cryogénique, dans lequel l'air utilisé est amené dans une purification catalytique et ensuite dans un système de rectification et le produit de haute pureté est prélevé du système de rectification, l'air utilisé lors de la purification catalytique s'écoulant à travers une couche catalytiquement active, les dimensions de la couche catalytiquement active, dans le sens de l'écoulement, étant au moins dix fois plus petites que ses dimensions perpendiculairement au sens d'écoulement et la couche catalytiquement active présentant une structure de type matrice, en particulier de type grille ou textile.

2. Procédé selon la revendication 1, **caractérisé en ce que** la couche catalytiquement active présente un matériau de fibres dans lequel des métaux catalytiquement actifs et/ou des composés métalliques catalytiquement actifs sont incorporés sous forme très finement divisée.

3. Procédé selon l'une quelconque des revendications 1 à 2, **caractérisé en ce que** l'air utilisé lors de la purification catalytique est guidé sur au moins une natte de fibres rigide.

4. Procédé selon la revendication 3, **caractérisé en ce que** l'air utilisé est guidé sur au moins une natte de fibres, qui présente une épaisseur d'environ 10 à environ 20 mm.

5. Procédé selon l'une quelconque des revendications 1 à 4, **caractérisé en ce que** l'air utilisé est guidé avec une vitesse des gaz d'environ 0,05 à environ 0,2 m/s, de préférence d'environ 0,1 m/s à travers la couche catalytiquement active.

6. Procédé selon l'une quelconque des revendications 1 à 5, **caractérisé en ce que** l'air utilisé est guidé à travers un récipient dans lequel sont réalisées la purification catalytique et au moins une étape d'adsorption.

7. Dispositif pour la préparation d'un produit de haute pureté par séparation d'air cryogénique, qui présente un canal d'air utilisé dans lequel est disposée une unité de purification, qui présente une étape de catalyseur avec une couche catalytiquement active, le canal d'air utilisé allant vers un système de rectification, qui présente au moins une conduite de produit pour un produit de haute pureté, **caractérisé en ce que** les dimensions de la couche catalytiquement active, dans le sens de l'écoulement, sont au moins dix fois plus petites que ses dimensions perpendiculairement au sens d'écoulement et que la couche catalytiquement active présente une structure de type matrice, en particulier de type grille ou textile.

8. Dispositif selon la revendication 7, **caractérisé en ce que** l'étape de catalyseur contient un matériau dans lequel des métaux catalytiquement actifs et/ou des composés métalliques catalytiquement actifs sont incorporés dans une structure de type matrice sous forme très finement divisée.

9. Dispositif selon la revendication 8, **caractérisé en ce que** les métaux catalytiquement actifs et/ou les composés métalliques catalytiquement actifs contiennent du palladium, du platine, du manganèse, de l'argent, du cobalt et/ou du cuivre et/ou des composés de ces métaux.

10. Dispositif selon l'une quelconque des revendications 7 à 9, **caractérisé en ce que** l'étape de catalyseur contient un matériau de fibres.

11. Dispositif selon la revendication 10, **caractérisé en ce que** le matériau de fibres est réalisé sous forme d'une natte de fibres rigide.

12. Dispositif selon la revendication 11, **caractérisé en ce que** la natte de fibres présente une épaisseur d'environ 10 à environ 20 mm.

13. Dispositif selon les revendications 11 ou 12, **caractérisé en ce que** plusieurs nattes de fibres sont disposées parallèlement les unes au-dessus des autres.

14. Dispositif selon l'une quelconque des revendications 11 à 13, **caractérisé en ce que** l'unité de purification contient au moins une natte de fibres et au moins un matériau d'adsorption en vrac.
